# EUROPÄISCHE PATENTANMELDUNG

(11) **EP 0 959 302 A2**
(43) Veröffentlichungstag der Anmeldung: **24.11.1999**
(21) Anmeldenummer: 99109672.8
(22) Anmeldetag: 17.05.1999
(51) Int. Cl.: F23J 13/00, F16L 55/033

(54) **Rauchgasabzugsschalldämpfer**

(30) Priorität: 20.05.1998 DE 19822624; 20.05.1998 DE 19822626
(71) Anmelder: Reitz, Eberhard, 35216 Biedenkopf (DE)
(72) Erfinder: Reitz, Eberhard, 35216 Biedenkopf (DE)
(74) Vertreter: Wolf, Günter, Dipl.-Ing.

(57) **Zusammenfassung**

Die Erfindung betrifft einen Rauchgasabzugsschalldämpfer für Heizkessel, bestehend aus einem Außenrohr (1) mit innerer Schalldämmpackung (2), die zwischen dem Außenrohr (1) und einem den Durchströmkanal (3) begrenzenden, mit gelochter Wand (4) versehenen Innenrohr (5) angeordnet ist, wobei der Durchströmkanal (3) im Inneren des Außenrohres (1) hinter Stirnwänden (7) des Außenrohres (1) mit Übergängen (8) auf einen in bezug auf den Außendurchmesser (D) von Anschlußstutzen (6) kleineren Durchmesser (D') reduziert ist. Nach der Erfindung ist mindestens der zuströmseitige Übergang (8) der in Form von Stufen oder Kegelstümpfen (8', 8'') ausgebildeten Übergänge (8) des Durchströmkanales (3) ebenfalls mit Löchern (9) versehen. Dadurch wird der Schalldämmeffekt nicht unwesentlich verbessert.

## Beschreibung

Die Erfindung betrifft einen Rauchgasabzugsschalldämpfer insbesondere für Heizkessel gemäß Oberbegriff des unabhängigen Patentanspruches 1.

Derartige Rauchgasabzugsschalldämpfer sind bekannt und in Benutzung, so daß es diesbezüglich an sich keines besonderen druckschriftlichen Nachweises bedarf. Derartige Abzugsschalldämpfer dienen dazu, die Schallabstrahlung eines Heizungskessels zu reduzieren. Diesbezüglich wird verwiesen bspw. auf das DE-U-90 05 421.
Derartige Rauchgasabzugsschalldämpfer haben sich als verbesserungsfähig erwiesen, und der Erfindung liegt die Aufgabe zugrunde, einen Schalldämpfer der eingangs genannten Art hinsichtlich seiner Schalldämmwirkung mit einer einfachen Maßnahme zu verbessern und dies letztlich mit der Zielsetzung, aufgrund optimierter Schalldämmung die Länge derartiger Schalldämpfer, damit den Material- und Herstellungsaufwand reduzieren und damit auch den Abstand zwischen Heizkessel und Schornstein verkleinern zu können.

Diese Aufgabe ist mit einem Rauchgasabzugsschalldämpfer der eingangs genannten Art nach der Erfindung durch die im Kennzeichen des unabhängigen Patentanspruches genannten Merkmale gelöst. Vorteilhafte Weiterbildungen ergeben sich nach den abhängigen Ansprüchen.
Im Gegensatz zu bisherigen Schalldämpfern für diesen speziellen Zweck, bei denen das Abgas ausschließlich längs bzw. parallel zu den Öffnungen des Innenrohres strömt, ist mit der erfindungsgemäßen Ausbildung dafür gesorgt, daß der Mantelstrom der Abgase mehr oder weniger senkrecht auf Löcher zumindest zuströmseitig am Innenrohr trifft, was zu einer merklich verbesserten Schalldämmung führt, und zwar auch schon dann, wenn sich diese Maßnahme auf die Zuströmseite beschränkt.
Unabhängig von dieser sich auf die An- bzw. Zuströmseite beschränkende Maßnahme ist aber auch eine Gestaltung des Innenrohres dahingehend möglich, daß das sich von Anschlußstutzen zu Anschlußstutzen erstreckende, gelochte Innenrohr von der Zuströmseite zur Abströmseite sich kegelstumpfförmig verengend ausgebildet ist. Auch hierbei ergeben sich für die Mantelströmung durch die Löcher direkt in die Schalldämmpackung gerichtete Strömungskomponenten und hier sogar mit dem Vorteil, daß dies über die ganze Länge des Innenrohres erfolgt.

Abgesehen davon ist es zweckmäßig und trägt zur weiteren Schalldämmung bei, den abströmseitigen Endbereich des Innenrohres zu lochen, da aufgrund der dortigen Innenrohrerweiterung in der Strömung mehr oder weniger quer orientierte Strömungskomponenten entstehen, die dann auf die dort vorgesehenen Öffnungen bzw. Löcher und die dahinter befindliche Dämmpackung stoßen.

Vorteilhafte Ausführungsformen bestehen in Folgendem:
Die gelochten Übergänge können als integrale, aufgeweitete Teile des Innenrohres ausgebildet sein. Außerdem können die gelochten Übergänge als integrale Teile der Anschlußstutzen ausgebildet sein. Es ist aber auch möglich, die gelochten Übergänge als integrale Teile der Stirnwände auszubilden. Ferner kann vorgesehen werden, die Anschlußstutzen als integrale Teile der klöpperbodenartig ausgeformten Stirnwände auszubilden und die Übergänge im Anschlußbereich der Anschlußstutzen anzusetzen.

Der erfindungsgemäße Rauchgasabzugsschalldämpfer mit seinen verschiedenen Ausführungsformen und zusätzlich vorteilhaften Weiterbildungsformen wird nachfolgend anhand der zeichnerischen Darstellung von Ausführungsbeispielen näher erläutert, die im wesentlichen alle nur schematisch als Strichdarstellungen verdeutlicht und gelochte Bereiche als gestrichelte Linien dargestellt sind.

Es zeigt
- Fig. 1: einen Schnitt durch die bevorzugte Ausführungsform des Rauchgasabzugsschalldämpfers;
- Fig. 2,3: im Schnitt besondere Ausführungsformen des gelochten Innenrohres;
- Fig. 4,5: ebenfalls im Schnitt weitere Ausführungsformen;
- Fig. 6: im Schnitt eine weitere besondere Ausführungsform des Innenrohres;
- Fig. 7: schematisch den Rauchgasabzugsschalldämpfer im Schnitt;
- Fig. 7A: im Schnitt eine besondere Ausführungsform;
- Fig. 8: ebenfalls im Schnitt die beiden, den Schalldämpfer bildenden Hälften;
- Fig. 9: teilweise im Schnitt und in Ansicht die beiden Schalldämpferhälften mit besonderen Ausführungsformen;
- Fig. 10: im Schnitt eine mögliche Ausführungsform der Verbindungsstelle der beiden Schalldämpferhälften und
- Fig. 11: im Schnitt eine bevorzugte Ausführungsform der Verbindungsstelle der beiden Schalldämpferhälften.

Der Rauchgasabzugsschalldämpfer besteht nach wie vor aus einem Außenrohr 1 mit innerer Schalldämmpackung 2, die zwischen dem Außenrohr 1 und einem den Durchströmkanal 3 begrenzenden, mit gelochter Wand 4 versehenen Innenrohr 5 angeordnet ist, wobei der Durchströmkanal 3 im Inneren des Außenrohres 1 hinter Stirnwänden 7 des Außenrohres 1 mit Übergängen 8 auf einen in bezug auf den Außendurchmesser D von Anschlußstutzen 6 kleineren Durchmesser D' reduziert ist.

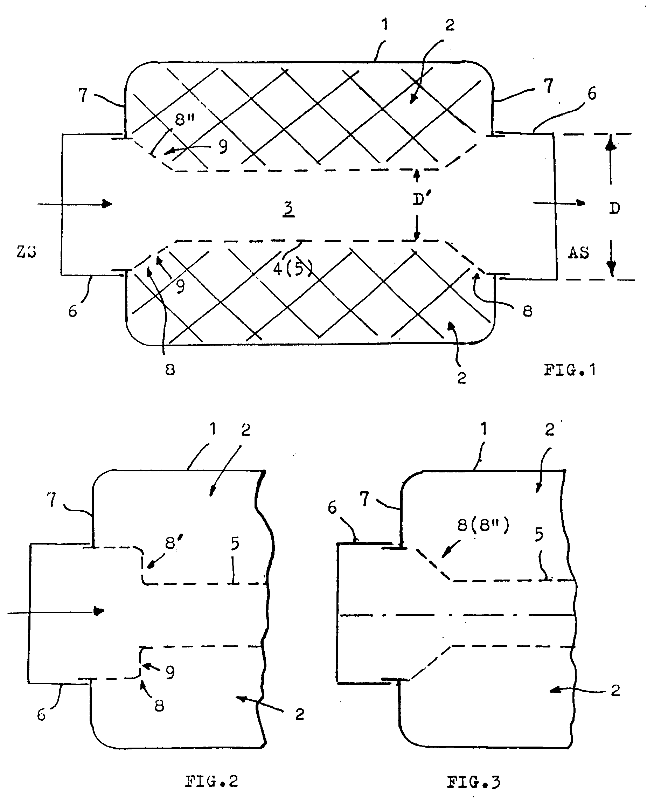

Für einen derartigen Schalldämpfer ist nun, orientiert an den Fig. 1, 2, wesentlich, daß mindestens der zuströmseitige Übergang 8 der in Form von Stufen 8' oder Kegelstümpfen 8'' ausgebildeten Übergänge 8 des Durchströmkanales 3 ebenfalls mit Löchern 9 versehen ist.

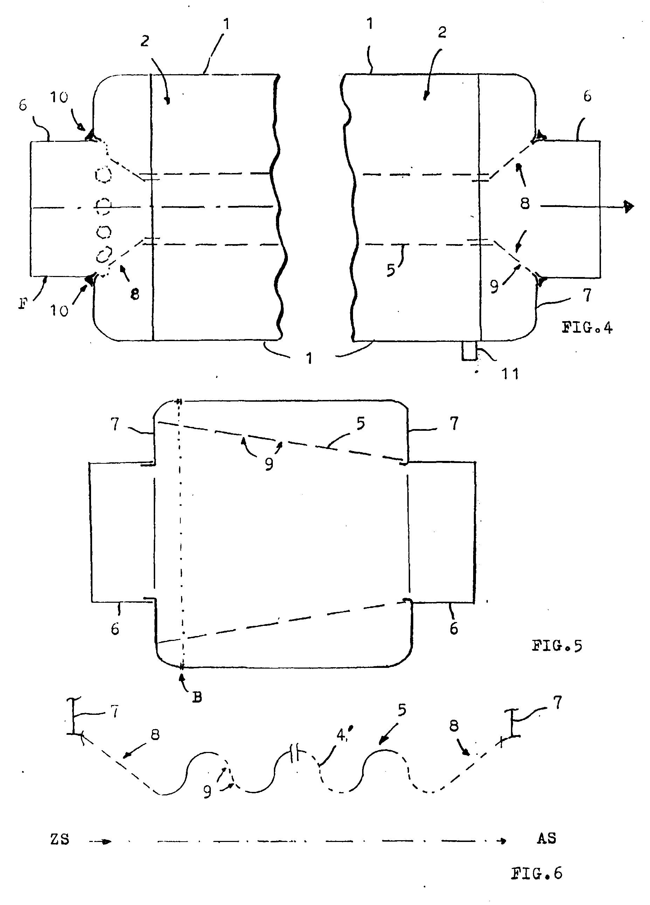

Bezüglich der Ausführungsform, bei der die gelochten Übergänge 8 als integrale, aufgeweitete Teile des Innenrohres 5 ausgebildet sind, wird auf die Fig. 2, 3 verwiesen und bezüglich der Maßgabe, daß die gelochten Übergänge 8 als integrale Teile der Anschlußstutzen 6 ausgebildet sein können, auf Fig. 4, rechte Seite der dortigen Schnittdarstellung. Die Übergänge 8 können aber auch gemäß Fig. 4, linke Seite, als integrale Teile der Stirnwände 7 ausgebildet sein, wobei dann, wie dargestellt, die Übergänge 8 im Anschlußbereich 10 der Anschlußstutzen 6 angesetzt sind.

Wie in Fig. 4, linke Seite, angedeutet, ist mit Rücksicht auf sich etwa niederschlagendes Kondensat bezüglich eines Kondensatabflusses und der Lochanordnung vorgesehen (was für alle Ausführungsformen gilt), daß die mindestens eine Lochreihe in den Übergängen 8 die zylindrische Erstreckungsfläche F der Anschlußstutzen 6 zumindest tangiert. Außerdem ist mit Rücksicht darauf am Außenrohr 1 mindestens unter dem hinteren, abströmseitigen Übergang 8 ein Kondensatabflußanschluß 11 angeordnet (siehe ebenfalls Fig. 4, rechte Seite).

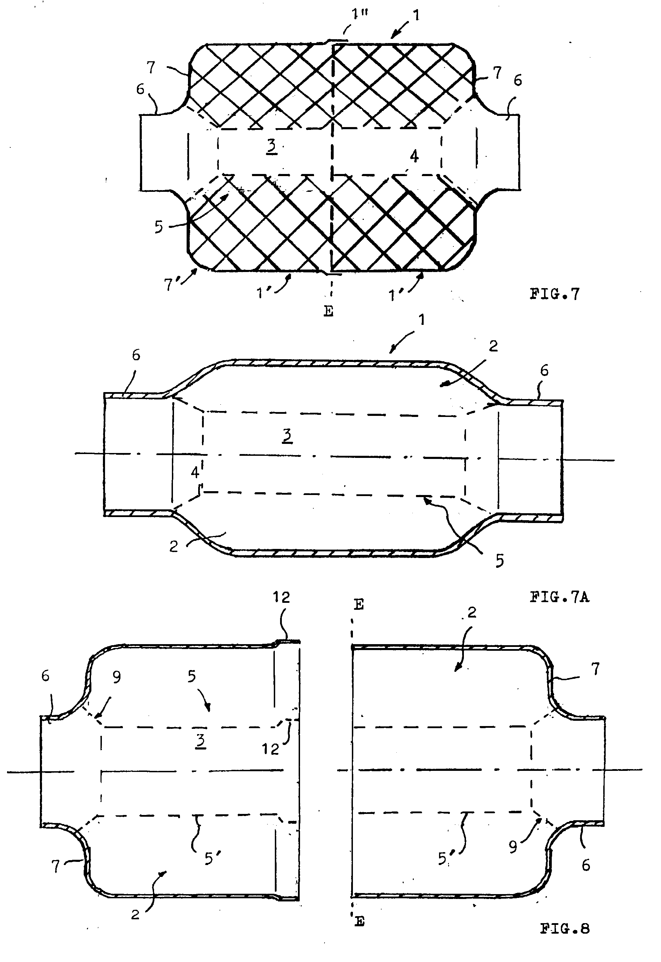

Eine besondere aber den gleichen Effekt bewirkende Ausführungsform ist in Fig. 5 dargestellt, gemäß der das sich von Anschlußstutzen 6 zu Anschlußstutzen 6 erstreckende, gelochte Innenrohr 5 von der Zuströmseite ZS zur Abströmseite AS, also über seine gesamte Länge, sich kegelstumpfförmig verengend ausgebildet ist. In Fig. 5 ist dabei der Schalldämpfer in bezug auf die anderen Darstellungen vergleichsweise kürzer dargestellt, was bei entsprechend großem Kegelwinkel und entsprechend großem Außendurchmesser D'' ebenfalls in die Praxis umgesetzt werden kann und im Extrem zu einem mehr scheibenförmigen Schalldämpfer führt, der ein sehr nahes Heranrücken eines Heizkessels an den Schornstein zuläßt. In diesem Falle muß natürlich die zuströmseitige Stirnwand 7 als separater "Boden", wie bei B angedeutet, in geeigneter Weise angesetzt sein oder, was noch näher erläutert wird, das Außenrohr 1 wird aus zwei Hälften bzw. Rohrteilen 1' im Sinne der Fig. 7 ausgebildet.

Um den durchströmenden Abgasen möglichst viel an mehr oder weniger quer zur Strömung orientierten Löchern 9 in den Weg der Mantelströmung zu stellen, kann außerdem unter Verweis auf Fig. 6 die gelochte Wand 4 des Innenrohres 5 im Schnitt gesehen, gewellt oder mehrfach unstetig verlaufend ausgebildet werden, wobei die Löcher 9 in der Wandstruktur mindestens in den zuströmseitig orientierten Wandflächen 4' angeordnet sind.

Für die Ausführungsform nach der bereits erwähnten Fig. 7 ist für eine derartige Ausgestaltung des Rauchgasabzugsschalldämpfers wesentlich, daß das Außenrohr 1 aus zwei Rohrteilen 1' mit im wesentlichen gleicher Form und Größe gebildet ist, die mit den Stirnwänden 7 einstückig ausgeformt und an ihren Stoßrändern 1'' miteinander gasdicht verbunden sind.

Bei der dargestellten Ausführungsform sind auch bereits hinsichtlich einer günstigen Ausformung die Übergänge 7' der Stirnwände 7 zu den Rohrteilen 1' klöpperbodenartig ausgebildet, und an den Stirnwänden 7 sind auch die Anschlußstutzen 6 einstückig mit ausgeformt. Die Anschlußstutzen 6 können aber auch ohne weiteres als separate Rohrabschnitte angeschweißt sein.

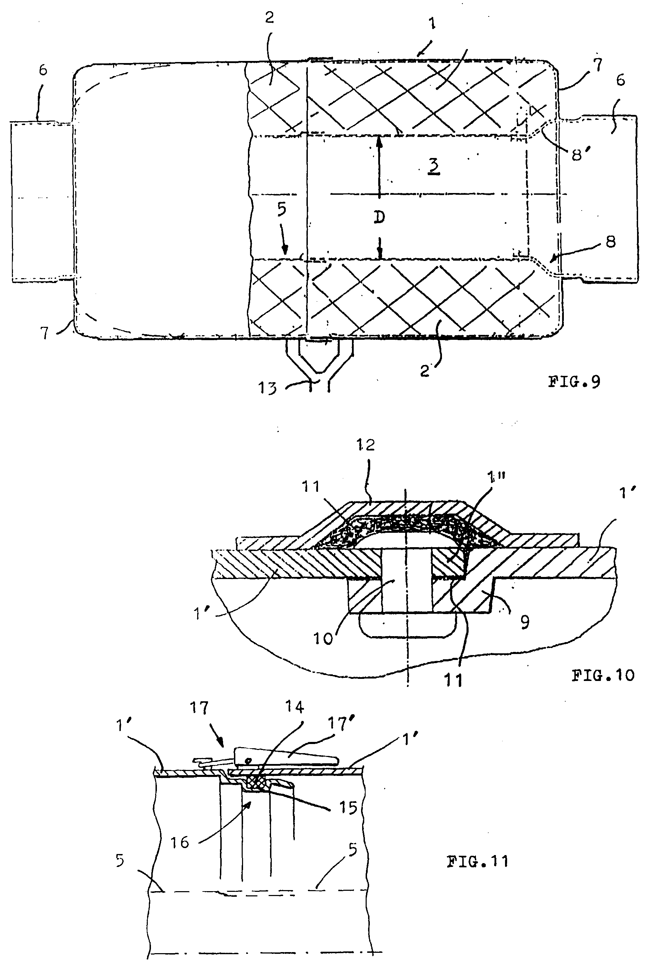

Mit Rücksicht auf die zweckmäßige Einbringbarkeit der Schalldämmpackung 2 ist, siehe Fig. 8, vorteilhaft das gelochte Innenrohr 5 ebenfalls aus zwei bis zur Teilungsebene E des Aussenrohres 1 reichenden Teilen 5' gebildet, die mit den Stirnwänden 7 fest verbunden sind. Wie ohne weiteres vorstellbar, können dadurch die beiden topfartig offenen Hälften rings um die Innenrohrteile 5' mit Schalldämmpackungshälften bequem ausgefüllt werden.

Zwecks günstiger Zusammenfügbarkeit der beiden Hälften ist, wie ebenfalls aus Fig. 8 ersichtlich, die eine Hälfte des Schalldämpfers an den Stoßrändern ihres Außen- und Innenrohres 1, 5 mit umlaufenden Einsteckerweiterungen 12 zur Aufnahme der Stoßränder der anderen Hälfte des Schalldämpfers versehen.

Bezüglich zweier besonderer Ausführungsformen wird auf Fig.9 verwiesen. Wie in der linken Hälfte gestrichelt dargestellt, erhält jede Außenrohrhälfte eine parabelförmige Kontur, was ebenfalls einem günstigen Ausformvorgang jeder Hälfte in einem Stück entgegenkommt. Außerdem hat eine derartige Ausformung den Vorteil, daß etwa im Schalldämpfer anfallendes Kondensat gezielt zur Mitte läuft und dort durch einen Kondensatabfluß 11, wie in Fig. 9 dargestellt, abgeleitet werden kann.

Ausgehend von der in der rechten Hälfte der Fig.9 dargestellten und an sich bekannten Ausbildung des Innenrohres, nämlich derart, daß das Innenrohr 5 einen kleineren Durchmesser D hat als die Anschlußstutzen 6 und an diese bzw. die Stirnwände 7 mit kegelstumpfförmigen Übergängen 8 angeschlossen ist, sind auch in diesem Falle die Wände 8' der kegelstumpfförmigen Ubergänge 8 ebenfalls gelocht ausgebildet, und zwar aus den einleitend genannten Gründen.

Abgesehen davon, daß die beiden Hälften mittig mit einer einzigen Rundum-Schweißnaht gasdicht verbunden werden können, werden die den Schalldämpfer bildenden Hälften im Bereich ihrer Teilungs- bzw. Anschlußebene E bevorzugt mit mechanischen Mitteln M miteinander gasdicht verbunden, wie dies stark vergrößert in Fig.10 dargestellt ist. Hiernach sind die Einsteckerweiterungen 12 der einen Hälfte und der Stoßrand 1'' der anderen Hälfte fluchtend zueinanderr gelocht und durch sogenannte Popnieten 13 fest miteinander verbunden, wobei hitzebeständiges Dichtungsmittel 14 eingefügt sein kann. Das Ganze kann dann noch, ebenfalls unter Einfügung von Dichtungsmittel 14 mit einer in geeigneter Weise spannbaren Hohlbandage 15 abgedeckt sein. Bevorzugt wird aber bezüglich einer mechanischen Verbindung die in Fig.11 dargestellte Ausführungsform, wobei der eine der die Hälften bildenden Rohrteile 1' mit seinem eingekröpften Endrand 16 in den anderen Rohrteil 1' einfach eingesteckt ist. Der einsteckbare Endrand 16 ist dabei mit einer umlaufenden Ringnut 17 versehen, in der eine Ringdichtung 18, vorzugsweise in Form einer sogenannten Lippendichtung angeordnet ist. Für den dichten Zusammenhalt der beiden Hälften sind geeignete Spannelemente 19 vorgesehen, und zwar vorzugsweise und wie dargestellt in Form von auf dem Umfang gleichmäßig verteilten Spannschlössern 19'.

Bezüglich der Ausführungsform nach Fig.7A, gemäß der das Aussenrohr 1 einschließlich seiner Stirnwände 7 und der Anschlußstutzen 6 schweißnahtlos aus einem einzigen Rohrabschnitt gebildet ist, wird auf Fig. 7A verwiesen. Bei dieser Ausführungsform wird das bekannte, sogenannte Innenhochdruckumformverfahren genutzt, das hier ohne weiteres angewandt werden kann, zumal solche Schalldämpfer dank ihres erhöhten Schalldämmeffektes mit relativ geringer Länge bemessen werden können. Dieser vorteilhaft schweißnahtlosen, also absolut einstückigen Ausbildung steht auch nicht entgegen, daß eine Schalldämmpackung 2 und ein gelochtes Innenrohr 5 einzubringen sind. Die Dämmpackung 2 kann nämlich ohne weiteres entweder als loses Material oder in Form von Dämmmattenzuschnitten von der einen und/oder anderen Seite durch die Anschlußstutzen 6 eingeführt bzw. eingestopft werden, wonach ggf. mit einem dem Innenrohr 5 vorgesetzten, kegelförmigen Hilfswerkzeug dieses ein- bzw. durchgeschoben wird, wonach, in Position gebracht, die beiden Enden des Innenrohres 5 innen an den ausgehalsten Anschlußstutzen 6 einfach angeheftet werden.

## Patentansprüche

1. Rauchgasabzugsschalldämpfer für Heizkessel, bestehend aus einem Außenrohr (1) mit innerer Schalldämmpackung (2), die zwischen dem Außenrohr (1) und einem den Durchströmkanal (3) begrenzenden, mit gelochter Wand (4) versehenen Innenrohr (5) angeordnet ist, wobei der Durchströmkanal (3) im Inneren des Außenrohres (1) hinter Stirnwänden (7) des Außenrohres (1) mit Übergängen (8) auf einen in bezug auf den Außendurchmesser (D) von Anschlußstutzen (6) kleineren Durchmesser (D') reduziert ist,
**dadurch gekennzeichnet,**
daß mindestens der zuströmseitige Übergang (8) der in Form von Stufen oder Kegelstümpfen (8', 8'') ausgebildeten Übergänge (8) des den Durchströmkanal (3) bildenden Innenrohres (5) ebenfalls mit Löchern (9) versehen ist.

2. Rauchgasabzugsschalldämpfer nach Anspruch 1,
**dadurch gekennzeichnet,**
daß die gelochten Übergänge (8) als integrale, aufgeweitete Teile des Innenrohres (5) ausgebildet sind.

3. Rauchgasabzugsschalldämpfer nach Anspruch 1 oder 2,
**dadurch gekennzeichnet,**
daß die Anschlußstutzen (6) als integrale Teile der klöpperbodenartig ausgeformten Stirnwände (7) ausgebildet sind und die Übergänge (8) im Anschlußbereich (10) der Anschlußstutzen (6) angesetzt sind.

4. Rauchgasabzugsschalldämpfer nach Anspruch 1,
**dadurch gekennzeichnet,**
daß das gelochte Innenrohr (5) von der Zuströmseite (ZS) zur Abströmseite (AS) über seine gesamte Länge sich kegelstumpfförmig verengend ausgebildet ist.

5. Rauchgasabzugsschalldämpfer nach einem der Ansprüchel bis 4,
**dadurch gekennzeichnet,**
daß die gelochte Wand (4) des Innenrohres (5), im Längsschnitt gesehen, gewellt oder mehrfach unstetig verlaufend ausgebildet ist und die Löcher (9) in der Wandstruktur mindestens in den zuströmseitig orientierten Wandflächen (4') angeordnet sind.

6. Rauchgasabzugsschalldämpfer nach einem der Ansprüche 1 bis 5,
**dadurch gekennzeichnet,**
daß das Außenrohr (1) aus zwei Rohrteilen (1') mit im wesentlichen gleicher Form und Größe gebildet ist, die mit den Stirnwänden (7) einstückig ausgeformt und an ihren Stoßrändern (1'') miteinander gasdicht verbunden sind.

7. Rauchgasabzugsschalldämpfer nach einem der Ansprüche 1 bis 6,
**dadurch gekennzeichnet,**
daß das gelochte Innenrohr (5) ebenfalls aus zwei bis zur Teilungsebene (E) des Außenrohres (1) reichenden Teilen (5') gebildet ist, die mit den Stirnwänden (7) fest verbunden sind.

8. Rauchgasabzugsschalldämpfer nach Anspruch 6 oder 7,
**dadurch gekennzeichnet,**
daß der eine der die Hälften bildenden Rohrteile (1') mit seinem mit einer mit Ringdichtung (14) bestückten Ringnut (15) versehenen Endrand (16) in den anderen Rohrteil (1') eingesteckt und beide Rohrteile (1') abgedichtet mit Spannelementen (17) zusammengespannt sind.

9. Rauchgasabzugsschalldämpfer nach Anspruch 7 oder 8,
**dadurch gekennzeichnet,**
daß die eine Hälfte des Schalldämpfers an den Stoßrändern ihres Außen- und Innenrohres (1, 5) mit umlaufenden Einsteckerweiterungen (12) zur Aufnahme der Stoßränder der anderen Hälfte des Schalldämpfers versehen ist.

10. Rauchgasabzugsschalldämpfer nach einem der Ansprüche 1,2 oder 5,
**dadurch gekennzeichnet,**
daß das Außenrohr (1) einschließlich seiner Stirnwände (7) und der Anschlußstutzen (6) schweißnahtlos aus einem einzigen Rohrabschnitt gebildet ist.
